# EUROPEAN PATENT APPLICATION

(11) **EP 3 902 209 A1**
(43) Date of publication of application: **27.10.2021**
(21) Application number: 20171384.9
(22) Date of filing: 24.04.2020
(51) Int. Cl.: H04L 12/46, H04L 29/06, H04W 36/28, H04W 74/02, H04W 76/16, H04L 12/707

(54) **INTERNET ACCESS PROVIDER WITH AN INDEPENDENT MULTI-CONNECTIVITY FRAMEWORK**

(71) Applicant: Deutsche Telekom AG, 53113 Bonn (DE)
(72) Inventor: AMEND, Markus, 63667 Nidda (DE); BOGENFELD, Eckard, 67316 Carlsberg (DE); HENZE, Thomas, 53173 Bonn (DE); HELLEBRAND, Katja, 61118 Bad Vilbel (DE)
(74) Representative: Vossius & Partner Patentanwälte Rechtsanwälte mbB

(57) **Abstract**

A system comprising a User Equipment, UE, at least two Internet access providers, a multi-connectivity provider, and a Data Network, DN, wherein the system is configured to provide multi-connectivity between the UE and the multi-connectivity provider, wherein: the system is configured to establish and to provide a first connectivity between the UE and the multi-connectivity provider, wherein: the UE is configured to connect to the multi-connectivity provider through a first Internet access provider; the UE is configured to establish a first access to the multi-connectivity provider, via the first Internet access provider; the multi-connectivity provider is configured to authenticate the first access and to establish the first access after authenticating the first access; the multi-connectivity provider is configured to, through a traffic management function, perform re-direction of user plane traffic between the UE and the DN, wherein the re-direction is performed by encapsulating the user plane traffic into the first access, the system is configured to establish and to provide a second connectivity between the UE and the multi-connectivity provider, wherein: the UE is configured to connect to the multi-connectivity provider through a second Internet access provider; the UE is configured to establish a second access to the multi-connectivity provider, via the second Internet access provider; the multi-connectivity provider is configured to authenticate the second access and to establish the second access after authenticating the second access; the multi-connectivity provider is configured to, through a traffic management function, to perform re-direction of user plane traffic between the UE and the DN, wherein the re-direction is performed by encapsulating the user plane traffic into the second access, wherein the system is configured to establish and to provide the first and second connectivity either simultaneously or one after the other.

## Description

### Field of the invention

The invention relates to a system comprising an Internet access provider with an independent multi-connectivity framework.

### Background

Typically Internet network operators provide one or several Internet accesses to customers such as, for example, fixed (e.g. xDSL), Wi-Fi (e.g. public Hotspots) and/or cellular (e.g. 2G-5G) access.

Even if these customers own user equipment(s) (UEs), such as smartphones or residential gateways (RG), which are potentially capable of connecting to multiple accesses simultaneously, they do not make use of the capability to connect to multiple accesses simultaneously due to the lack of multi-connectivity technologies.

In the case of smartphones, the common simultaneous connectivity to Wi-Fi and cellular network does not automatically mean that the smartphones can enjoy the benefit of being simultaneously connected to more than one network. In some cases, applications of these smartphones are stuck to one access and are unable to benefit from a second available access in terms of reliability and speed.

Network protocols which could leverage the potential of multiple accesses like Multipath Transmission Protocol (MPTCP), Multipath Quick UDP Internet Connection (MP-QUIC), Multipath Datagram Congestion Control Protocol (MPDCCP) and Stream Control Transmission Protocol (SCTP) are not widely adopted and require usually an end-to-end implementation. A broad and fast availability is therefore unrealistic.

### Technical problem

Standardized multi-connectivity architectures such as Access Traffic Steering Switching Splitting (ATSSS) part of 3GPP Rel. 16 standardization TS 23.501 version 16.4.0 or Hybrid Access Broadband Network Architecture such as Broadband Forum (BBF) specification TR-348, July 2016 or Nicolai Leymann and Cornelius Heidemann and Margaret Wasserman and Li Xue and Mingui Zhang, "Hybrid Access Network Architecture", draft-lhwxz-hybrid-access-network-architecture-02, January 2015, promise to provide a remedy and use such protocols between UE/RG and access operator network. Furthermore, these architectures give the operator of such architectures a comprehensive traffic management capability.

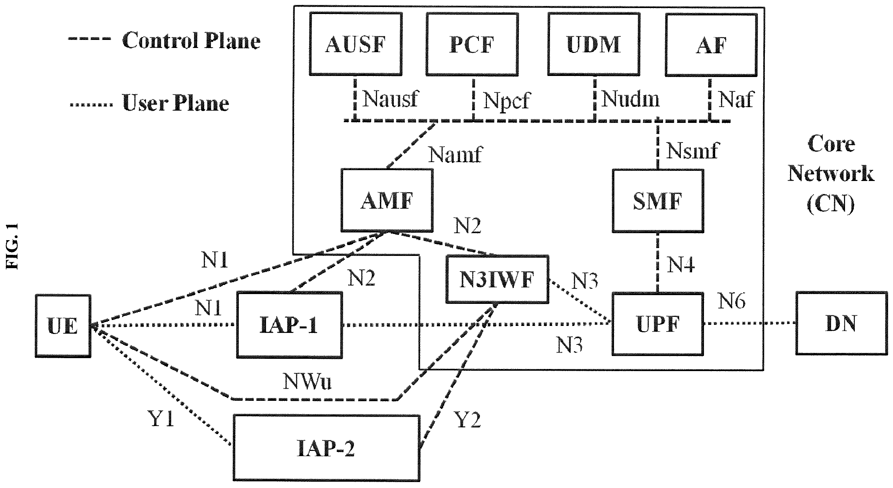

FIG. 1 illustrates an exemplary ATSSS architecture as defined by the 3GPP TS 23.501. In FIG. 1, the ATSSS manages simultaneous connectivity for UEs over cellular (3GPP access) and non-cellular access (untrusted non-3GPP access e.g. Wi-Fi). As shown in FIG. 1, the UE connects to a Data Network (DN) over cellular (3GPP Access) and Wi-Fi (Untrusted Non-3GPP access) using the N3 interface towards the ATSSS-UPF (User Plane Function) part of a 5G Core.

In FIG. 1, the untrusted non-3GPP access path is interconnected with the 5G Core through the Non-3GPP Interworking (N3IWF) entity/function, which is responsible to attach the non-3GPP access to the 5G core. The UPF can be understood as the interface between UE and Data Network (e.g. Internet) taking responsibility for traffic management. Other entities/functions forming part of the 5G Core as shown in FIG. 1 are: Authentication Server Function (AUSF), Unified Data Management (UDM), Access and Mobility Management Function (AMF), Session Management Function (SMF), Policy Control Function (PCF) and Application Function (AF) including the control plane and user plane. Further, FIG. 1 also shows the name of the interfaces that are exposed by each of these entities.

The BBF and the Internet Engineering Task Force (IETF) specifies the residential use case, known as Hybrid Access. Currently BBF re-defines Hybrid Access to work with ATSSS also. Hybrid Access combines therefore fixed access (xDSL or fiber) and cellular access within a Residential Gateway (RG).

However, those architectures require integration into the access provider network that provides at least one of the accesses of the simultaneous used accesses. In case of ATSSS, the integration happens in the cellular provider network, whereas for the Hybrid access, it might be either the cellular or the fixed access network provider.

Usually an operator of at least one of the multi-connectivity architectures (e.g. in ATSSS or Hybrid Access) owns one or all accesses for multi-connectivity purposes.

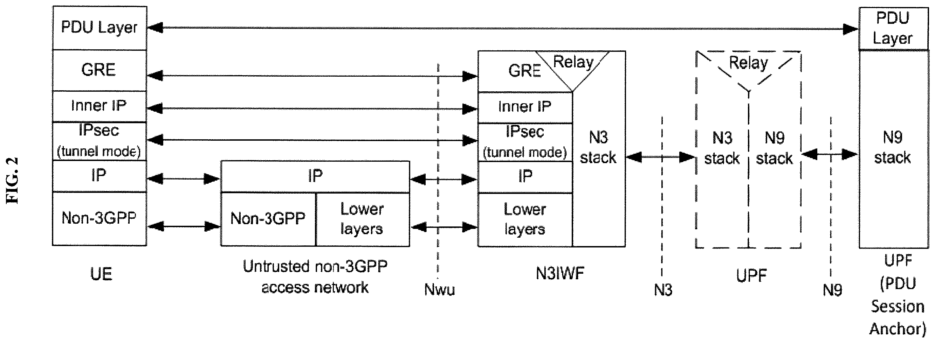

FIG. 2 illustrates the ATSSS protocol stack for untrusted 3GPP access (WiFi) with Internet Protocol Security (IPsec) tunnelling as defined by the 3GPP (FIG. 1). IPsec is a secure network protocol that authenticates and encrypts the packets of data to provide secure encrypted communication between two devices over an Internet Protocol network.

In this scenario ATSSS defines an implementation of the multi-connectivity termination point (ATSSS UPF) into the cellular 5G network and integrates the potential independent Wi-Fi through IPsec tunnelling. The IPsec tunnel is built between the UE and the Non 3GPP Inter Working Function (N3IWF) entity (depicted in FIG. 2 as part of the protocol stack) over Wi-Fi (untrusted non-3GPP access network) and encapsulates 3GPP related information and the user plane traffic exchanged between UE and UPF.

In the Hybrid Access case it is presumed, that an operator provides both accesses, which does not require of any tunnel to reach the multi-connectivity termination point.

However, both cases profit from an existing Authentication, authorization and accounting (AAA) system in the operator network. AAA is a system for tracking user activities on an IP-based network and controlling their access to the network resources.

Currently, there are no existing approaches that allow multi-connectivity network architectures to be independent from a particular access provider. In addition, current existing approaches are not capable to work over-the-top (OTT).

In view of the above, it is an object the present invention to provide a multi-connectivity network architecture that is independent from a particular access provider.

Further, another object of the invention is to provide a multi-connectivity network architecture with the capability to manage the traffic over-the-top (OTT).

Besides OTT multi-connectivity traffic management, the invention also has the following advantageous technical effects: secure traffic over potential untrusted paths/accesses; gain control over any information exchange between customer/UE and Internet; hide multipath protocol specific extensions which likely fail to pass middle-boxes; place multi-connectivity termination point in public (cloud) data center; and automatic access provisioning.

### Summary of the invention

The above objects are achieved by the features of the independent claims.

According to a first aspect, the invention provides a system comprising a User Equipment, UE, at least two Internet access providers, a multi-connectivity provider, and a Data Network, DN, wherein the system is configured to provide multi-connectivity between the UE and the multi-connectivity provider, wherein: the system is configured to establish and to provide a first connectivity between the UE and the multi-connectivity provider, wherein: the UE is configured to connect to the multi-connectivity provider through a first Internet access provider; the UE is configured to establish a first access to the multi-connectivity provider, via the first Internet access provider; the multi-connectivity provider is configured to authenticate the first access and to establish the first access after authenticating the first access; the multi-connectivity provider is configured to, through a traffic management function, perform re-direction of user plane traffic between the UE and the DN, wherein the re-direction is performed by encapsulating the user plane traffic into the first access, the system is configured to establish and to provide a second connectivity between the UE and the multi-connectivity provider, wherein: the UE is configured to connect to the multi-connectivity provider through a second Internet access provider; the UE is configured to establish a second access to the multi-connectivity provider, via the second Internet access provider; the multi-connectivity provider is configured to authenticate the second access and to establish the second access after authenticating the second access; the multi-connectivity provider is configured to, through a traffic management function, to perform re-direction of user plane traffic between the UE and the DN, wherein the re-direction is performed by encapsulating the user plane traffic into the second access, wherein the system is configured to establish and to provide the first and second connectivity either simultaneously or one after the other.

According to a preferred aspect, the first access is a first tunnel access and the second access is a second tunnel access.

According to a preferred aspect, the location information of the multi-connectivity provider is an IP address and a port.

According to a preferred aspect, the UE is configured to establish the first and second access (TA-1, TA-2) by using location information of the multi-connectivity provider, wherein the location information is stored in the UE, or provided by an application, or provided by a Subscriber Identity Module, SIM, or provided by an embedded SIM, eSIM.

According to a preferred aspect, the multi-connectivity provider is configured to check whether the UE and/or the first and second access (TA-1, TA-2) are eligible and, only if eligible, to establish the first access and second access, respectively.

According to a preferred aspect, the encapsulated user plane traffic is encrypted.

According to a preferred aspect, the establishment and authentication of a tunnel and/or the encryption of the encapsulated user plane traffic is done with an Extensible Authentication Protocol, EAP, method or Transport Layer Security, TLS, method.

According to a preferred aspect, the encapsulated user plane traffic is encrypted.

According to a preferred aspect, the system comprises N Internet access providers, where N is a positive integer larger than 2, and the UE is configured to connect to the multi-connectivity provider via N tunnel accesses through each respective N Internet access provider.

According to a second aspect, the invention provides a system comprising a User Equipment, UE, at least two Internet access providers, a multi-connectivity provider, and a Data Network, DN, wherein the system is configured to provide multi-connectivity between the UE and the multi-connectivity provider through a single multi-path tunnel access, the single multi-path tunnel access comprising at least a first and second multi-path managed tunnel access, wherein: the system is configured to establish and to provide a first connectivity, through the first multi-path managed tunnel access between the UE and the multi-connectivity provider, wherein: the UE is configured to connect to the multi-connectivity provider through a first Internet access provider; the UE is configured to establish the first multi-path managed tunnel access to the multi-connectivity provider, via the first Internet access provider, by using location information of the multi-connectivity provider; the multi-connectivity provider is configured to authenticate the first multi-path managed tunnel access and to establish the first multi-path managed tunnel access; the multi-connectivity provider is configured to, through a traffic management function, perform re-direction of user plane traffic between the UE and the DN, wherein the re-direction is performed by encapsulating the user plane traffic into the first multi-path managed tunnel access, the system is configured to establish and to provide a second connectivity, through the second multi-path managed tunnel access between the UE and the multi-connectivity provider, wherein: the UE is configured to connect to the multi-connectivity provider through a second Internet access provider; the UE is configured to establish the second multi-path tunnel access to the multi-connectivity provider, via the second Internet access provider, by using location information of the multi-connectivity provider; the multi-connectivity provider is configured to authenticate the second multi-path managed tunnel access and to establish the second multi-path managed tunnel access; the multi-connectivity provider is configured to, through a traffic management function, to perform re-direction of user plane traffic between the UE and the DN, wherein the re-direction is performed by encapsulating the user plane traffic into the second multi-path managed tunnel access; wherein the UE and the multi-connectivity provider are equipped with a multi-path capable network protocol capable of managing the multi-path tunnel access, wherein once the multi-path tunnel access, between the UE and the traffic management function of the multi-connectivity provider, is established and the user plane traffic is encapsulated, the multi-path capable network protocol is configured to decide over which Internet access provider to sent the encapsulated data based on a traffic scheduling logic and/or policy.

According to a preferred aspect, the multi-connectivity provider is configured to check whether the UE and/or the first and second multi-path managed accesses are eligible and, only if eligible, to establish the first access and second multi-path managed accesses, respectively.

According to a preferred aspect, the multi-path capable network protocol is one of: Multipath Transmission Control Protocol, MPTCP, or Multipath Quick UDP Internet Connection, MP-QUIC, protocol, or Datagram Congestion Control Protocol, DCCP, tunnel, or the Multipath extension of the Datagram Congestion Control Protocol, MP-DCCP, tunnel, or a Concurrent Multipath Transfer extension of the Stream Control Transmission Protocol, CMT-SCTP, network protocol.

According to a preferred aspect, the encapsulated user plane traffic is encrypted.

According to a preferred aspect, the establishment and authentication of the multi-path tunnel and/or the encryption of the encapsulated user plane traffic is done via an Extensible Authentication Protocol, EAP, method or Transport Layer Security, TLS, method.

According to a preferred aspect, the system comprises N Internet access providers, where N is a positive integer larger than 2, and the UE is configured to connect to the multi-connectivity provider via N multi-path managed tunnel access through each respective N Internet access provider.

According to a third aspect, the invention provides a method for providing multi-connectivity between a User Equipment, UE, and a multi-connectivity provider in a system, the system comprising the UE, at least two Internet access providers, the multi-connectivity provider, and a Data Network, DN, the method comprising the steps of: establishing and providing a first connectivity between the UE and the multi-connectivity provider, by connecting from the UE to the multi-connectivity provider through a first Internet access provider; establishing a first access from the UE to the multi-connectivity provider, via the first Internet access provider; authenticating, at the multi-connectivity provider, the first access and establishing the first access; performing re-direction of user plane traffic at the multi-connectivity provider, through a traffic management function, between the UE and the DN, wherein the re-direction is performed by encapsulating the user plane traffic into the first access, establishing and providing a second connectivity between the UE and the multi-connectivity provider, by connecting from the UE to the multi-connectivity provider through a second Internet access provider; establishing a second access from the UE to the multi-connectivity provider, via the second Internet access provider; authenticating, at the multi-connectivity provider, the second access and establishing the second access; performing re-direction of user plane traffic at the multi-connectivity provider, through a traffic management function, between the UE and the DN, wherein the re-direction is performed by encapsulating the user plane traffic into the second access, wherein the establishing and providing of the first and second connectivity is done either simultaneously or one after the other.

According to a preferred aspect, the first access is a first tunnel access and the second access is a second tunnel access.

According to a preferred aspect, the location information of the multi-connectivity provider is an IP address and a port.

According to a preferred aspect, the establishing of the first and second access is done using location information of the multi-connectivity provider, wherein the location information is stored in the UE, or provided by an application, or provided by a Subscriber Identity Module, SIM, or provided by an embedded SIM, eSIM.

According to a preferred aspect, after authenticating the first and second access, checking, by the multi-connectivity provider, whether the UE and/or the first and second access are eligible and, only if eligible, establishing the first access and second access, respectively.

According to a preferred aspect, the encapsulated user plane traffic is encrypted.

According to a preferred aspect, the establishing and authenticating of a tunnel and/or the encryption of the encapsulated user plane traffic is done with an Extensible Authentication Protocol, EAP, method or Transport Layer Security, TLS, method.

According to a preferred aspect, the system comprises N Internet access providers, where N is a positive integer larger than 2, and the UE connects to the multi-connectivity provider via N tunnel accesses through each respective N Internet access provider.

According to a fourth aspect, the invention provides a A method for providing multi-connectivity between a User Equipment, UE, and a multi-connectivity provider through a multi-path tunnel access in a system, the system comprising the UE, at least two Internet access providers, the multi-connectivity provider, and a Data Network, DN, the method comprising the steps of: establishing and providing a first connectivity, through a first multi-path managed tunnel access between the UE and the multi-connectivity provider, by: connecting, from the UE to the multi-connectivity provider, through a first Internet access provider; establishing a first multi-path managed tunnel access, from the UE to the multi-connectivity provider, via the first Internet access provider, by using location information of the multi-connectivity provider; authenticating, at the multi-connectivity provider, the first multi-path managed tunnel access and establishing the first multi-path managed tunnel access; performing re-direction of user plane traffic at the multi-connectivity provider, through a traffic management function, between the UE and the DN, wherein the re-direction is performed by encapsulating the user plane traffic into the first multi-path managed tunnel access, establishing and providing a second connectivity, through a second multi-path managed tunnel access between the UE and the multi-connectivity provider, by: connecting, from the UE to the multi-connectivity provider through a second Internet access provider; establishing a second multi-path tunnel access, from the UE to the multi-connectivity provider, via the second Internet access provider, by using location information of the multi-connectivity provider; authenticating, at the multi-connectivity provider, the second multi-path managed tunnel access and establishing the second multi-path managed tunnel access; performing re-direction of user plane traffic at the multi-connectivity provider, through a traffic management function, between the UE and the DN, wherein the re-direction is performed by encapsulating the user plane traffic into the second multi-path managed tunnel access; wherein the UE and the multi-connectivity provider are equipped with a multi-path capable network protocol for managing the multi-path tunnel access, wherein once the multi-path tunnel access, between the UE and the traffic management function of the multi-connectivity provider, is established and the user plane traffic is encapsulated, deciding, by the multi-path capable network protocol, over which Internet access provider to sent the encapsulated data and sending the encapsulated data based on a traffic scheduling logic and/or policy.

According to a preferred aspect, after authenticating the first and second multi-path tunnel accesses, checking, by the multi-connectivity provider, whether the UE and/or the first and second multi-path tunnel accesses are eligible and, only if eligible, establishing the first and second multi-path tunnel accesses, respectively.

According to a preferred aspect, the multi-path capable network protocol is one of: Multipath Transmission Control Protocol, MPTCP, or Multipath Quick UDP Internet Connection, MP-QUIC, protocol, or Datagram Congestion Control Protocol, DCCP, tunnel, or the Multipath extension of the Datagram Congestion Control Protocol, MP-DCCP, tunnel, or a Concurrent Multipath Transfer extension of the Stream Control Transmission Protocol, CMT-SCTP, network protocol.

According to a preferred aspect, the encapsulated user plane traffic is encrypted.

According to a preferred aspect, establishing and authenticating of the multi-path tunnel and/or the encryption of the encapsulated user plane traffic is done using an Extensible Authentication Protocol, EAP, method or Transport Layer Security, TLS, method.

Other aspects, features, and advantages will be apparent from the summary above, as well as from the description that follows, including the figures and the claims.

### Brief description of drawings

In the drawings:
- FIG. 1: illustrates an exemplary ATSSS architecture as defined by the 3GPP TS 23.501.
- FIG. 2: illustrates the ATSSS protocol stack for untrusted 3GPP access (WiFi) with IPsec tunneling as defined by the 3GPP TS 23.501.
- FIG. 3: illustrates a basic architecture for an OTT multi-connectivity provider according to an embodiment of the present invention.
- FIG. 4: illustrates an OTT provider leveraging MPTCP for traffic management purposes according to an embodiment of the present invention.
- FIG. 5: illustrates a basic architecture for an OTT multi-connectivity provider using a multi-path capable tunnel according to an embodiment of the present invention.

### Detailed description of the invention

According to an embodiment of the invention, there is provided a multi-connectivity architecture which is independent from any access network operator or at least from an integration into the network of the access provider. This can be particularly useful for Mobile Virtual Network Operators (MVNOs) or completely independent parties, which want to provide multi-connectivity without owning the underlying access or accesses.

The following description and figures assume a User Equipment (UE) such as, for example, a smartphone, or Residential Gateway (RG), equipped with Wi-Fi and cellular access interfaces.

However, this can be transferred to any other multi-connectivity scenario with more or other accesses.

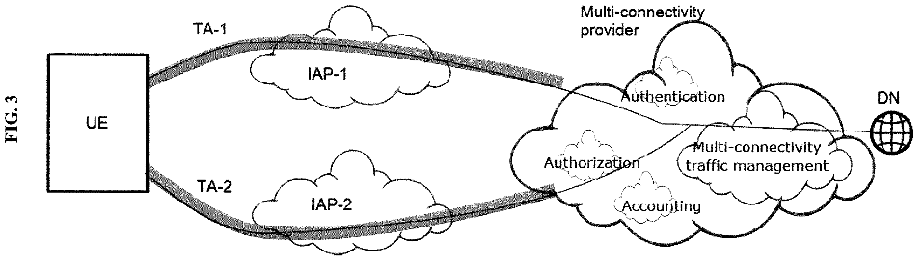

FIG. 3 illustrates an exemplary architecture for an OTT multi-connectivity provider according to an embodiment of the invention. The principle of this architecture requires a multi-connectivity UE or RG able to connect to more than one access network and a multi-connectivity provider acting over the top of the access provider networks. The multi-connectivity provider is connected to a Data Network (DN), e.g. the Internet.

The UE is configured to connect to the multi-connectivity provider across the access networks with the help of tunnel access for each respective multipath, e.g. VPN connections. In FIG. 3, there is illustrated a first tunnel access (TA-1), that connects the UE to the multi-connectivity provider via a first internet access provider (IAP-1), and a N tunnel access (TA-N), that connects the UE to the multi-connectivity provider via a N internet access provider (IAP-N). The number N of tunnel accesses and internet access providers is a positive integer equal to or larger than two. However, under operation, this number may fall below two, e.g. if an access is broken, and may need to be restored.

The multi-connectivity provider requires, at least, the functions of authentication and multi-connectivity traffic management. These functions are located in the multi-connectivity provider's cloud, e.g. located in a public data center.

Optionally, the multi-connectivity provider may further comprise the functions of Authorization and Accounting, Policy management or (meta-) data collection. However, these optional functions can be separated by e.g. Network Function Virtualization (NFV) or operated in one entity. This entity or these entities can run on bare metal servers or executed in virtual environments like Virtual Machines (VM) or in user space isolated environments typically called "Container".

The procedure to provide a first connectivity for a multi-connectivity UE/RG is as follows.

The UE is connects to a first Internet access, for example a 3GPP access or another type of access.

Then, the UE establishes a tunnel to the multi-connectivity provider. The only information required to establish this tunnel is the location of the multi-connectivity provider, e.g. addresses by an IP address (and port). This information may be stored in the UE, or provided by an application, or provided by a Subscriber Identity Module (SIM), or provided by an embedded SIM (eSIM). The established tunnel transports user plane traffic but may further include control plane traffic as well.

As a preferred alternative, if for some reason it is required to separate control plane and user plane traffic, before the UE establishes a tunnel to the multi-connectivity provider for user plane traffic, the UE may also establish a different separate tunnel for control plane traffic. In this case, while the control data is exchanged between UE and multi-connectivity provider, the user plane traffic passes through the multi-connectivity provider towards the DN.

Thereafter, the multi-connectivity provider authenticates the tunnel to ensure that only eligible devices and/or access paths can establish the tunnel and exchange in the following user plane traffic.

The process of tunnel establishment, authentication and securing may follow any state of the art technologies like Extensible Authentication Protocol (EAP) methods. EAP is an authentication framework for providing common functions and negotiation of authentication methods called EAP methods.

Once the tunnel has been authenticated, the traffic management function of the multi-connectivity provider re-directs the user plane traffic between the UE and the Data Network (DN). The re-direction of traffic is performed by encapsulating the traffic into the tunnel instead of sending the traffic without encapsulation on the access interfaces.

As a preferred alternative, the encapsulated user plane traffic may be encrypted.

As a preferred alternative, the establishment and authentication of a tunnel and/or the encryption of the encapsulated user plane traffic is performed with an Extensible Authentication Protocol, EAP, method or a Transport Layer Security, TLS, method.

A connection over a second access follows the same procedure and might be executed simultaneously or at a later point in time.

It could also be that before the UE establishes a tunnel to the multi-connectivity provider, a different tunnel is established for control- and user plane traffic. Whereas the control data is exchanged between UE and Multi-Connectivity provider and user plane traffic passes towards the DN.

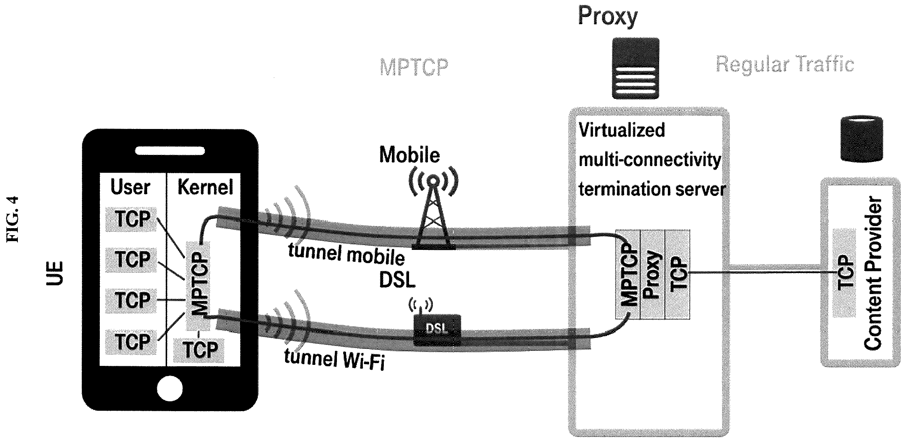

For making use of multiple accesses or paths when communicating with the WWW through an OTT multi-connectivity provider network it requires traffic management policies/protocols. A potential protocol might be the Multipath Transmission Control Protocol (MPTCP). A possible implementation based on MPTCP can be found in FIG. 4.

FIG. 4 illustrates an OTT provider leveraging MPTCP for traffic management purposes according to an embodiment of the present invention. In FIG. 4, there is illustrated a UE, a proxy comprising a virtualized multi-connectivity termination server and a content provider. In FIG. 4, both the UE and the multi-connectivity traffic management entity are equipped with the multipath extension for TCP (MPTCP).

Once the tunnel(s) are established between both the UE and the multi-connectivity traffic management entity and henceforth traffic is encapsulated, MPTCP takes over path/tunnel selection based on a traffic scheduling logic/policy.

The final part of the communication with the content provider, most of the times located in the Internet, the multi-connectivity traffic management entity converts (depending on the traffic direction) from/to the regular TCP traffic to/from MPTCP traffic.

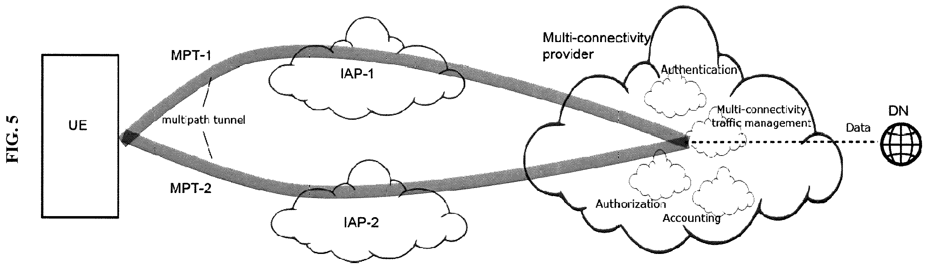

Another possible architecture to enable an OTT multi-connectivity provider is the usage of a multipath capable tunnel. FIG. 5 illustrates a basic architecture for an OTT multi-connectivity provider using a multi-path capable tunnel according to an embodiment of the present invention.

In FIG. 5, the UE/RG and the OTT multi-connectivity provider are equipped with a multi-path capable network protocol capable of managing the tunnel access between both termination points (at the UE and the multi-connectivity provider).

In FIG. 5 a similar procedure to the one of FIG. 3 is followed, with the difference that instead of having two different tunnels, there is only one multi-path tunnel access between the UE and the traffic management function of the multi-connectivity provider. Further difference is that once the multi-path tunnel is established and the user plane traffic is encapsulated, the multi-path capable network protocol decides over which Internet access provider the encapsulated data is sent based on a traffic scheduling logic and/or policy.

In addition, the traffic management function is configured to convert the user plane traffic from the UE to the DN from MPTCP to TCP, and the user plane traffic from the DN to the UE from TCP to MPTCP.

In a preferred alternative, the multi-path capable network protocol is any one of the following protocols: Multipath Transmission Control Protocol, MPTCP, or Multipath Quick UDP Internet Connection, MP-QUIC, protocol, or Datagram Congestion Control Protocol, DCCP, tunnel, or the Multipath extension of the Datagram Congestion Control Protocol, MP-DCCP, tunnel, or a Concurrent Multipath Transfer extension of the Stream Control Transmission Protocol, CMT-SCTP, network protocol.

The procedure differs from the one of FIG. 5 in that the tunnel is established once and integrates new paths or accesses by the principles of the multipath protocol. A re-establishment of the tunnel might be required after a period of no accesses available, similar to the same procedure as applied to the embodiment of FIG. 3.

For setting up an UE/RG to become capable of communicating with the OTT multi-connectivity provider, at least information about its reachability is required. This might be an IP address or IP address and port. The setup of the device might happen with a configuration utility, e.g. an App or a manual setup. For authentication and encryption purposes it might require additional information as prerequisite like a certificate, password, passphrase, SIM card, etc.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A system comprising a User Equipment, UE, at least two Internet access providers (IAP-1, IAP-2), a multi-connectivity provider, and a Data Network, DN, wherein the system is configured to provide multi-connectivity between the UE and the multi-connectivity provider, wherein:
the system is configured to establish and to provide a first connectivity between the UE and the multi-connectivity provider, wherein:
the UE is configured to connect to the multi-connectivity provider through a first Internet access provider (IAP-1);
the UE is configured to establish a first access (TA-1) to the multi-connectivity provider, via the first Internet access provider (IAP-1);
the multi-connectivity provider is configured to authenticate the first access (TA-1) and to establish the first access (TA-1) after authenticating the first access (TA-1);
the multi-connectivity provider is configured to, through a traffic management function, perform re-direction of user plane traffic between the UE and the DN, wherein the re-direction is performed by encapsulating the user plane traffic into the first access (TA-1),
the system is configured to establish and to provide a second connectivity between the UE and the multi-connectivity provider, wherein:
the UE is configured to connect to the multi-connectivity provider through a second Internet access provider (IAP-2);
the UE is configured to establish a second access (TA-2) to the multi-connectivity provider, via the second Internet access provider (IAP-2);
the multi-connectivity provider is configured to authenticate the second access (TA-2) and to establish the second access (TA-2) after authenticating the second access;
the multi-connectivity provider is configured to, through a traffic management function, to perform re-direction of user plane traffic between the UE and the DN, wherein the re-direction is performed by encapsulating the user plane traffic into the second access (TA-2),
wherein the system is configured to establish and to provide the first and second connectivity either simultaneously or one after the other.

2. The system of claim 1,
wherein the first access is a first tunnel access and the second access is a second tunnel access, and/or
wherein the location information of the multi-connectivity provider is an IP address and a port, and/or
wherein the UE is configured to establish the first and second access (TA-1, TA-2) by using location information of the multi-connectivity provider, wherein the location information is stored in the UE, or provided by an application, or provided by a Subscriber Identity Module, SIM, or provided by an embedded SIM, eSIM; and/or
wherein the multi-connectivity provider is configured to check whether the UE and/or the first and second access (TA-1, TA-2) are eligible and, only if eligible, to establish the first access and second access, respectively.

3. The system of claim 1 or 2,
wherein the encapsulated user plane traffic is encrypted, and/or
wherein the establishment and authentication of a tunnel and/or the encryption of the encapsulated user plane traffic is done with an Extensible Authentication Protocol, EAP, method or Transport Layer Security, TLS, method.

4. The system of any one of claims 1 to 3, wherein the system comprises N Internet access providers, where N is a positive integer larger than 2, and the UE is configured to connect to the multi-connectivity provider via N tunnel accesses through each respective N Internet access provider.

5. A system comprising a User Equipment, UE, at least two Internet access providers (IAP-1, IAP-2), a multi-connectivity provider, and a Data Network, DN, wherein the system is configured to provide multi-connectivity between the UE and the multi-connectivity provider through a single multi-path tunnel access, the single multi-path tunnel access comprising at least a first and second multi-path managed tunnel access, wherein:
the system is configured to establish and to provide a first connectivity, through the first multi-path managed tunnel access between the UE and the multi-connectivity provider, wherein:
the UE is configured to connect to the multi-connectivity provider through a first Internet access provider (IAP-1);
the UE is configured to establish the first multi-path managed tunnel access (MPT-1) to the multi-connectivity provider, via the first Internet access provider (IAP-1), by using location information of the multi-connectivity provider;
the multi-connectivity provider is configured to authenticate the first multi-path managed tunnel access (MPT-1) and to establish the first multi-path managed tunnel access (MPT-1);
the multi-connectivity provider is configured to, through a traffic management function, perform re-direction of user plane traffic between the UE and the DN, wherein the re-direction is performed by encapsulating the user plane traffic into the first multi-path managed tunnel access (MPT-1),
the system is configured to establish and to provide a second connectivity, through the second multi-path managed tunnel access between the UE and the multi-connectivity provider, wherein:
the UE is configured to connect to the multi-connectivity provider through a second Internet access provider (IAP-2);
the UE is configured to establish the second multi-path tunnel access (MPT-2) to the multi-connectivity provider, via the second Internet access provider (IAP-2), by using location information of the multi-connectivity provider;
the multi-connectivity provider is configured to authenticate the second multi-path managed tunnel access (MPT-2) and to establish the second multi-path managed tunnel access (MPT-2);
the multi-connectivity provider is configured to, through a traffic management function, to perform re-direction of user plane traffic between the UE and the DN, wherein the re-direction is performed by encapsulating the user plane traffic into the second multi-path managed tunnel access (MPT-2);
wherein the UE and the multi-connectivity provider are equipped with a multi-path capable network protocol capable of managing the multi-path tunnel access,
wherein once the multi-path tunnel access, between the UE and the traffic management function of the multi-connectivity provider, is established and the user plane traffic is encapsulated, the multi-path capable network protocol is configured to decide over which Internet access provider to sent the encapsulated data based on a traffic scheduling logic and/or policy.

6. The system of claim 5,
wherein the multi-connectivity provider is configured to check whether the UE and/or the first and second multi-path managed accesses (MPT-1, MPT-2) are eligible and, only if eligible, to establish the first access and second multi-path managed accesses, respectively, and/or
wherein the multi-path capable network protocol is one of: Multipath Transmission Control Protocol, MPTCP, or Multipath Quick UDP Internet Connection, MP-QUIC, protocol, or Datagram Congestion Control Protocol, DCCP, tunnel, or the Multipath extension of the Datagram Congestion Control Protocol, MP-DCCP, tunnel, or a Concurrent Multipath Transfer extension of the Stream Control Transmission Protocol, CMT-SCTP, network protocol.

7. The system of claim 5 or 6,
wherein the encapsulated user plane traffic is encrypted, and/or
wherein the establishment and authentication of the multi-path tunnel and/or the encryption of the encapsulated user plane traffic is done via an Extensible Authentication Protocol, EAP, method or Transport Layer Security, TLS, method.

8. The system of any one of claims 5 to 7, wherein the system comprises N Internet access providers, where N is a positive integer larger than 2, and the UE is configured to connect to the multi-connectivity provider via N multi-path managed tunnel access through each respective N Internet access provider.

9. A method for providing multi-connectivity between a User Equipment, UE, and a multi-connectivity provider in a system, the system comprising the UE, at least two Internet access providers (IAP-1, LAP-2), the multi-connectivity provider, and a Data Network, DN, the method comprising the steps of:
establishing and providing a first connectivity between the UE and the multi-connectivity provider, by
connecting from the UE to the multi-connectivity provider through a first Internet access provider (IAP-1);
establishing a first access (TA-1) from the UE to the multi-connectivity provider, via the first Internet access provider (IAP-1);
authenticating, at the multi-connectivity provider, the first access (TA-1) and establishing the first access (TA-1);
performing re-direction of user plane traffic at the multi-connectivity provider, through a traffic management function, between the UE and the DN, wherein the re-direction is performed by encapsulating the user plane traffic into the first access (TA-1),
establishing and providing a second connectivity between the UE and the multi-connectivity provider, by
connecting from the UE to the multi-connectivity provider through a second Internet access provider (IAP-2);
establishing a second access (TA-2) from the UE to the multi-connectivity provider, via the second Internet access provider (IAP-2);
authenticating, at the multi-connectivity provider, the second access (TA-2) and establishing the second access (TA-2);
performing re-direction of user plane traffic at the multi-connectivity provider, through a traffic management function, between the UE and the DN, wherein the re-direction is performed by encapsulating the user plane traffic into the second access (TA-2),
wherein the establishing and providing of the first and second connectivity is done either simultaneously or one after the other.

10. The method of claim 9,
wherein the first access is a first tunnel access and the second access is a second tunnel access, and/or
wherein the location information of the multi-connectivity provider is an IP address and a port, and/or
wherein the establishing of the first and second access (TA-1, TA-2) is done using location information of the multi-connectivity provider, wherein the location information is stored in the UE, or provided by an application, or provided by a Subscriber Identity Module, SIM, or provided by an embedded SIM, eSIM; and/or
after authenticating the first and second access, checking, by the multi-connectivity provider, whether the UE and/or the first and second access (TA-1, TA-2) are eligible and, only if eligible, establishing the first access and second access, respectively.

11. The method of claim 9 or 10,
wherein the encapsulated user plane traffic is encrypted, and/or
wherein the establishing and authenticating of a tunnel and/or the encryption of the encapsulated user plane traffic is done with an Extensible Authentication Protocol, EAP, method or Transport Layer Security, TLS, method.

12. The method of any one of claims 9 to 11, wherein the system comprises N Internet access providers, where N is a positive integer larger than 2, and the UE connects to the multi-connectivity provider via N tunnel accesses through each respective N Internet access provider.

13. A method for providing multi-connectivity between a User Equipment, UE, and a multi-connectivity provider through a multi-path tunnel access in a system, the system comprising the UE, at least two Internet access providers (IAP-1, IAP-2), the multi-connectivity provider, and a Data Network, DN, the method comprising the steps of:
establishing and providing a first connectivity, through a first multi-path managed tunnel access between the UE and the multi-connectivity provider, by:
connecting, from the UE to the multi-connectivity provider, through a first Internet access provider (IAP-1);
establishing a first multi-path managed tunnel access (MPT-1), from the UE to the multi-connectivity provider, via the first Internet access provider (IAP-1), by using location information of the multi-connectivity provider;
authenticating, at the multi-connectivity provider, the first multi-path managed tunnel access (MPT-1) and establishing the first multi-path managed tunnel access (MPT-1);
performing re-direction of user plane traffic at the multi-connectivity provider, through a traffic management function, between the UE and the DN, wherein the re-direction is performed by encapsulating the user plane traffic into the first multi-path managed tunnel access (MPT-1),
establishing and providing a second connectivity, through a second multi-path managed tunnel access between the UE and the multi-connectivity provider, by:
connecting, from the UE to the multi-connectivity provider through a second Internet access provider (IAP-2);
establishing a second multi-path tunnel access (MPT-2), from the UE to the multi-connectivity provider, via the second Internet access provider (IAP-2), by using location information of the multi-connectivity provider;
authenticating, at the multi-connectivity provider, the second multi-path managed tunnel access (MPT-2) and establishing the second multi-path managed tunnel access (MPT-2);
performing re-direction of user plane traffic at the multi-connectivity provider, through a traffic management function, between the UE and the DN, wherein the re-direction is performed by encapsulating the user plane traffic into the second multi-path managed tunnel access (MPT-2);
wherein the UE and the multi-connectivity provider are equipped with a multi-path capable network protocol for managing the multi-path tunnel access,
wherein once the multi-path tunnel access, between the UE and the traffic management function of the multi-connectivity provider, is established and the user plane traffic is encapsulated, deciding, by the multi-path capable network protocol, over which Internet access provider to sent the encapsulated data and sending the encapsulated data based on a traffic scheduling logic and/or policy.

14. The method of claim 13,
after authenticating the first and second multi-path tunnel accesses, checking, by the multi-connectivity provider, whether the UE and/or the first and second multi-path tunnel accesses (TA-1, TA-2) are eligible and, only if eligible, establishing the first and second multi-path tunnel accesses, respectively,
wherein the multi-path capable network protocol is one of: Multipath Transmission Control Protocol, MPTCP, or Multipath Quick UDP Internet Connection, MP-QUIC, protocol, or Datagram Congestion Control Protocol, DCCP, tunnel, or the Multipath extension of the Datagram Congestion Control Protocol, MP-DCCP, tunnel, or a Concurrent Multipath Transfer extension of the Stream Control Transmission Protocol, CMT-SCTP, network protocol.

15. The method of claim 13 or 14,
wherein the encapsulated user plane traffic is encrypted, and/or
wherein establishing and authenticating of the multi-path tunnel and/or the encryption of the encapsulated user plane traffic is done using an Extensible Authentication Protocol, EAP, method or Transport Layer Security, TLS, method.

## Amended claims

### Amended claims in accordance with Rule 137(2) EPC.

1. A system comprising a User Equipment, UE, at least two Internet access providers (IAP-1, IAP-2), a multi-connectivity provider, and a Data Network, DN, wherein the system is configured to provide multi-connectivity between the UE and the multi-connectivity provider through a single multi-path tunnel access, the single multi-path tunnel access comprising at least a first and second multi-path managed tunnel access, wherein:
the system is configured to establish and to provide a first connectivity, through the first multi-path managed tunnel access between the UE and the multi-connectivity provider, wherein:
the UE is configured to connect to the multi-connectivity provider through a first Internet access provider (IAP-1);
the UE is configured to establish the first multi-path managed tunnel access (MPT-1) to the multi-connectivity provider, via the first Internet access provider (IAP-1), by using location information of the multi-connectivity provider;
the multi-connectivity provider is configured to authenticate the first multi-path managed tunnel access (MPT-1) and to establish the first multi-path managed tunnel access (MPT-1);
the multi-connectivity provider is configured to, through a traffic management function, send user plane traffic between the UE and the DN, wherein the sending is performed by encapsulating the user plane traffic into the first multi-path managed tunnel access (MPT-1),
the system is configured to establish and to provide a second connectivity, through the second multi-path managed tunnel access between the UE and the multi-connectivity provider, wherein:
the UE is configured to connect to the multi-connectivity provider through a second Internet access provider (IAP-2);
the UE is configured to establish the second multi-path managed tunnel access (MPT-2) to the multi-connectivity provider, via the second Internet access provider (IAP-2), by using location information of the multi-connectivity provider;
the multi-connectivity provider is configured to authenticate the second multi-path managed tunnel access (MPT-2) and to establish the second multi-path managed tunnel access (MPT-2);
the multi-connectivity provider is configured to, through a traffic management function, to send user plane traffic between the UE and the DN, wherein the sending is performed by encapsulating the user plane traffic into the second multi-path managed tunnel access (MPT-2);
wherein the UE and the multi-connectivity provider are equipped with a multi-path capable network protocol capable of managing the multi-path tunnel access,
wherein once the multi-path tunnel access, between the UE and the traffic management function of the multi-connectivity provider, is established and the user plane traffic is encapsulated, the multi-path capable network protocol is configured to decide over which Internet access provider to sent the encapsulated data based on a traffic scheduling logic and/or policy.

2. The system of claim 1,
wherein the multi-connectivity provider is configured to check whether the UE and/or the first and second multi-path managed accesses (MPT-1, MPT-2) are eligible and, only if eligible, to establish the first access and second multi-path managed accesses, respectively, and/or
wherein the multi-path capable network protocol is one of: Multipath Transmission Control Protocol, MPTCP, or Multipath Quick UDP Internet Connection, MP-QUIC, protocol, or Datagram Congestion Control Protocol, DCCP, tunnel, or the Multipath extension of the Datagram Congestion Control Protocol, MP-DCCP, tunnel, or a Concurrent Multipath Transfer extension of the Stream Control Transmission Protocol, CMT-SCTP, network protocol.

3. The system of claim 1 or 2,
wherein the encapsulated user plane traffic is encrypted, and/or
wherein the establishment and authentication of the multi-path tunnel and/or the encryption of the encapsulated user plane traffic is done via an Extensible Authentication Protocol, EAP, method or Transport Layer Security, TLS, method.

4. The system of any one of claims 1 to 3, wherein the system comprises N Internet access providers, where N is a positive integer larger than 2, and the UE is configured to connect to the multi-connectivity provider via N multi-path managed tunnel access through each respective N Internet access provider.

5. A method for providing multi-connectivity between a User Equipment, UE, and a multi-connectivity provider through a multi-path tunnel access in a system, the system comprising the UE, at least two Internet access providers (IAP-1, IAP-2), the multi-connectivity provider, and a Data Network, DN, the method comprising the steps of:
establishing and providing a first connectivity, through a first multi-path managed tunnel access between the UE and the multi-connectivity provider, by:
connecting, from the UE to the multi-connectivity provider, through a first Internet access provider (IAP-1);
establishing a first multi-path managed tunnel access (MPT-1), from the UE to the multi-connectivity provider, via the first Internet access provider (IAP-1), by using location information of the multi-connectivity provider;
authenticating, at the multi-connectivity provider, the first multi-path managed tunnel access (MPT-1) and establishing the first multi-path managed tunnel access (MPT-1);
sending user plane traffic at the multi-connectivity provider, through a traffic management function, between the UE and the DN, wherein the sending is performed by encapsulating the user plane traffic into the first multi-path managed tunnel access (MPT-1),
establishing and providing a second connectivity, through a second multi-path managed tunnel access between the UE and the multi-connectivity provider, by:
connecting, from the UE to the multi-connectivity provider through a second Internet access provider (IAP-2);
establishing a second multi-path tunnel access (MPT-2), from the UE to the multi-connectivity provider, via the second Internet access provider (IAP-2), by using location information of the multi-connectivity provider;
authenticating, at the multi-connectivity provider, the second multi-path managed tunnel access (MPT-2) and establishing the second multi-path managed tunnel access (MPT-2);
sending user plane traffic at the multi-connectivity provider, through a traffic management function, between the UE and the DN, wherein the sending is performed by encapsulating the user plane traffic into the second multi-path managed tunnel access (MPT-2);
wherein the UE and the multi-connectivity provider are equipped with a multi-path capable network protocol for managing the multi-path tunnel access,
wherein once the multi-path tunnel access, between the UE and the traffic management function of the multi-connectivity provider, is established and the user plane traffic is encapsulated, deciding, by the multi-path capable network protocol, over which Internet access provider to sent the encapsulated data and sending the encapsulated data based on a traffic scheduling logic and/or policy.

6. The method of claim 5,
after authenticating the first and second multi-path tunnel accesses, checking, by the multi-connectivity provider, whether the UE and/or the first and second multi-path tunnel accesses (TA-1, TA-2) are eligible and, only if eligible, establishing the first and second multi-path tunnel accesses, respectively,
wherein the multi-path capable network protocol is one of: Multipath Transmission Control Protocol, MPTCP, or Multipath Quick UDP Internet Connection, MP-QUIC, protocol, or Datagram Congestion Control Protocol, DCCP, tunnel, or the Multipath extension of the Datagram Congestion Control Protocol, MP-DCCP, tunnel, or a Concurrent Multipath Transfer extension of the Stream Control Transmission Protocol, CMT-SCTP, network protocol.

7. The method of claim 5 or 6,
wherein the encapsulated user plane traffic is encrypted, and/or
wherein establishing and authenticating of the multi-path tunnel and/or the encryption of the encapsulated user plane traffic is done using an Extensible Authentication Protocol, EAP, method or Transport Layer Security, TLS, method.
